(19) Europäisches Patentamt
European Patent Office
Office européen des brevets

(11) Veröffentlichungsnummer: **0 353 782 B1**

# (12) EUROPÄISCHE PATENTSCHRIFT

(45) Veröffentlichungstag der Patentschrift:
**25.09.91 Patentblatt 91/39**

(51) Int. Cl.$^5$: **B29B 7/24**

(21) Anmeldenummer: **89115673.9**

(22) Anmeldetag: **20.12.86**

---

(54) **Innenmischer.**

---

(43) Veröffentlichungstag der Anmeldung:
**07.02.90 Patentblatt 90/06**

(45) Bekanntmachung des Hinweises auf die
Patenterteilung:
**25.09.91 Patentblatt 91/39**

(84) Benannte Vertragsstaaten:
**DE ES FR GB IT**

(56) Entgegenhaltungen:
**DE-A- 2 058 975**
**GB-A- 485 542**

(56) Entgegenhaltungen:
**PATENT ABSTRACTS OF JAPAN, Band 10, Nr. 33 (M-452)[2090], 8. Februar 1986; & JP-A-60 189 405 (KOBE SEIKOSHO K.K.) 26-09-1985**
**PATENT ABSTRACTS OF JAPAN, Band 10, Nr. 71 (C-334)[2128], 20. März 1986; & JP-A-60 209 231 (SUMITOMO GOMU KOGYO K.K.) 21-10-1985**

(60) Veröffentlichungsnummer der früheren
Anmeldung nach Art. 76 EPü : **0 272 338**

(73) Patentinhaber: **Continental Aktiengesellschaft**
**Königsworther Platz 1**
**W-3000 Hannover 1 (DE)**

(72) Erfinder: **Ruthenberg, Klaus**
**Im Gohfeld 20**
**W 3003 Ronnenberg (DE)**

---

## Beschreibung

Die Erfindung bezieht sich auf einen Innenmischer mit dem im Oberbegriff des Anspruchs 1 angegebenen Aufbau.

Solche Innenmischer werden zur Aufbereitung plastischer Massen, insbesondere Kautschuk, verwendet, wobei die plastischen Massen und die Zugabestoffe nacheinander in den Innenmischer eingeführt, dort durchmischt und durchknetet und schließlich ausgetragen werden. Bei diesen Vorgängen wirken erhebliche Drücke auf den Stempel ein, die jedoch nicht zum Verkanten der hydraulischen Betätigungseinrichtung führen dürfen.

Während pneumatisch angetriebene Innenmischer eine gewisse puffernde Nachgiebigkeit des Stempels im Mischbetrieb zeigen — und dafür den Nachteil größerer Energieverluste wegen des pneumatischen Betriebes in Kauf nehmen — sind hydraulisch angetriebene Innenmischer der vorbekannten Art gewissermaßen starr, d.h. der Stempel kann unter stoßender Belastung beim Mischbetrieb kaum nachgeben. Belastungsspitzen können insbesondere zu Beginn des Mischvorganges entstehen, sei es wegen der mechanischen Inhomogenität der in Form größerer Platten, sogenannter "Felle", eingebrachten Kautschuke, sei es aufgrund der noch unzureichenden chemischen Homogenität nach Zugabe verfestigender oder erweichender Stoffe.

Zur Lösung dieses Problems wird in der DE-OS 2058975 eine Druckregelung des Stempels in Abhängigkeit der momentanen Leistungsaufnahme des Knetantriebes vorgeschlagen und zwar so, daß bei steigender Leistung der Stempeldruck nachläßt und umgekehrt.

In der japanischen Patentanmeldung 60-189405 ist ein weiterer geregelter Stempel für Innenmischer offenbart, wobei der Stempel über einen Gewindetrieb in der Höhe einstellbar ist. Innerhalb des Stempels ist eine auf konstanten Druck geregelte Kammer 29 vorgesehen. In diese Kammer 29 ragen kleine Kolben 28 herein, die zu einer Sensoreinrichtung 48 gehören. Die Relativlage zwischen den Kolben 28 und der Kammer 29 wird zur Regelung der Stempelstellung genutzt.

Aus der GB-PS 485,542 ist eine pneumatische Stempelsteuerung bekannt mit allmählicher statt abrupter Öffnung bzw. Schließung des Betätigungsventiles. Um die Rückwirkung des Mischgutes auf den Stempel geht es hierbei nicht.

In der japanischen Patentanmeldung 60-209231 ist ein hydraulisch betätigter Stempel für einen Innenmischer offenbart, bei dem sich die Außenwandung des zur Stempelbetätigung eingesetzten Hydraulikzylinders über einen Luftpuffer an der Füllschachtwandung abstützt. Zwar wird durch die Reihenschaltung eines Luftpuffers zum Hydraulikzylinder der ansonsten sehr steifen Betätigungshydraulik eine gewisse Elastizität verliehen, die sich jedoch bei besonders abrupten Schwankungen der Stempelkraft als nicht ausreichend erwiesen hat. Darüber hinaus leidet die offenbarte Vorrichtung an einer gewaltigen Bauhöhe; dieser prinzipielle Nachteil der einzylindrigen Betätigung ist durch die Zwischenschaltung des Luftpuffers noch erhöht.

Ausgehend von der der aus der japanischen Patentanmeldung 60-209231 abstrahierbaren Idee, Hydraulik und Pneumatik zur Erzielung geringer Energiekosten einerseits und einer gewissen Nachgiebigkeit andererseits miteinander zu kombinieren, stellt sich die Aufgabe, eine solche Vorrichtung zu schaffen, die auch abrupte Stempelkraftschwankungen abzufedern vermag und keine große Bauhöhe erfordert.

Gemäß der Erfindung enthält die Steuereinrichtung eine Einlaßleitung zur Hydraulikflüssigkeitszufuhr, eine Auslaßleitung zur Hydraulikflüssigkeitsabfuhr, eine erste Arbeitsleitung zur Abwärtsfahrt des Stempels, eine zweite Arbeitsleitung zur Aufwärtsfahrt des Stempels, eine Verbindungsleitung zwischen den Arbeitsleitungen, eine Ablaufleitung zum gedrosselten Hydraulikflüssigkeitsrücklauf, eine Nachsaugleitung, einen mit der Einlaßleitung verbundenen ersten Druckspeicher, einen mit der Nachsaugleitung verbundenen zweiten Druckspeicher sowie fernsteuerbare Ventile zur Verbindung und Sperrung der Leitungen untereinander und zur Einstellung der Betriebszustände "Aufwärtsfahrt des Stempels", "Abwärtsfahrt des Stempels", "Halten des Stempels in oberer Lage", "Halten des Stempels in unterer Lage" bzw. "Mischbetriebsstellung", wobei in der Mischbetriebsstellung der fernsteuerbaren Ventile die Nachsaugleitung mit dem zweiten Druckspeicher an die zweite Arbeitsleitung anschließbar ist, während die erste Arbeitsleitung mit dem ersten Druckspeicher in Verbindung steht. Dadurch werden die Kolben der Zylinder, welche die Kolbenräume für die Abwärtsfahrt bzw. den Vorschub von denen für die Aufwärtsfahrt bzw. den Rückhub trennen, hydraulisch eingespannt, jedoch mit einer Nachgiebigkeit, wie diese durch die Druckspeicher mit ihrer Gasblase gegeben ist. Es handelt sich also um ein pneumatisch-hydraulisches System mit Federeigenschaften, die zu einer angemessenen federnden Halterung des Stempels im Füllschacht führen. Beim Arbeiten es Innenmischers drückt demnach der Stempel mit einer Federkraft auf das Mischgut und kann zurückweichen, wenn der örtliche Druck im Mischraum zu hoch wird.

Zweckmäßige Weiterbildungen der Erfindung ergeben sich aus den Unteransprüchen.

Ein Ausführungsbeispiel der Erfindung wird anhand einer Figur beschrieben, die ein erfindungsgemäßes pneumatisch-hydraulisches System zeigt.

In der Figur ist das Innere der hydraulischen Betätigungseinrichtung 30 dargestellt. Die Zylinder weisen jeweils einen Kolben 40, einen ringförmigen Kolbenraum 41 und einen zylindrischen Kolbenraum 42 auf. Die ringförmigen Kolbenräume 41 sind untereinander über erste Verteilleitungen 43 und die zylindrischen Kolbenräume 42 über zweite Verteilleitungen 44 miteinander verbunden. Lagesensoren für die Stellung des Stempels 20 in Form von Lichtschranken sind bei 45, 46 und 47 angedeutet, die mit einer Steuerelektronik 50 verbunden sind, die wiederum mit einer pneumatisch-hydraulischen Steuereinrichtung 60 über Steuerleitungen 51 bis 54 verbunden ist.

Eine Hydropumpe 61 mit veränderlichem Verdrängungsvolumen ist über eine Einlaßleitung 62, in welcher ein Rückschlagventil 63 angeordnet ist, mit der hydraulischen Steuereinrichtung 60 verbunden, um die zum Betrieb der Einrichtung notwendige Hydraulikflüssigkeit zu liefern. Ein erster Druckspeicher 64, der eine Druckregeleinrichtung 65 aufweist, ist über eine Leitung 66, die eine Stromregeleinrichtung 67 und ein Rückschlagventil 68 enthält, welche parallel zueinander geschaltet sind, mit der Einlaßleitung 62 verbunden. Bei der Stromregeleinrichtung 67 kann es sich auch um ein einfaches Drosselventil handeln. Eine Verbindungsleitung 70 verbindet eine erste Arbeitsleitung 71 mit einer zweiten Arbeitsleitung 72 und führt auf ein gemeinsames Leitungsstück 73, von welchem eine Auslaßleitung 74, eine Ablaufleitung 75 und eine Nachsaugleitung 76 abzweigen. Die Nachsaugleitung 76 beherbergt ein Rückschlagventil 77 und führt zu einem zweiten Druckspeicher 78, der über eine zum Rückschlagventil 77 parallel geschaltete Stromregeleinrichtung 79 vom gemeinsamen Leitungsstück 73 her aufgeladen werden kann. Die Stromregeleinrichtung 79 verbindet auch das gemeinsame Leitungsstück 73 mit der Ablaufleitung 75, in welcher ein Rückschlagventil 80 mit einstellbarem Öffnungsdruck von beispielsweise 4 bar angeordnet ist.

Ein erstes fernsteuerbares Ventil 81 verbindet die Einlaßleitung 62 mit der Verbindungsleitung 70. Ein zweites fernsteuerbares Ventil 83 ist in der Verbindungsleitung 70 zwischen der ersten und zweiten Arbeitsleitung 71, 72 angeordnet. Ein drittes fernsteuerbares Ventil 83 stellt die Verbindung zwischen der Verbindungsleitung 70 und dem gemeinsamen Leitungsstück 73 her. Ein viertes fernsteuerbares Ventil 84 Liegt im Zuge der Auslaßleitung 74 und ermöglicht diese zu sperren bzw. zu öffnen. Schließlich ist noch ein fünftes fernsteuerbares Wegeventil 85 vorgesehen, welches den Einlaß 62 mit der zweiten Arbeitsleitung 72 und die erste Arbeitsleitung 71 mit einer AuslaßLeitung 86 zu verbinden ermöglicht. Die fernsteuerbaren Ventile 81, 82, 83 sind als Sitzventile zum Schalten großer Durchflußquerschnitte gestaltet. Die Fernsteuerung der Ventile 81, 82, 83 erfolgt vorzugsweise über eine elektrische Pilot- oder Vorsteuerstufe.

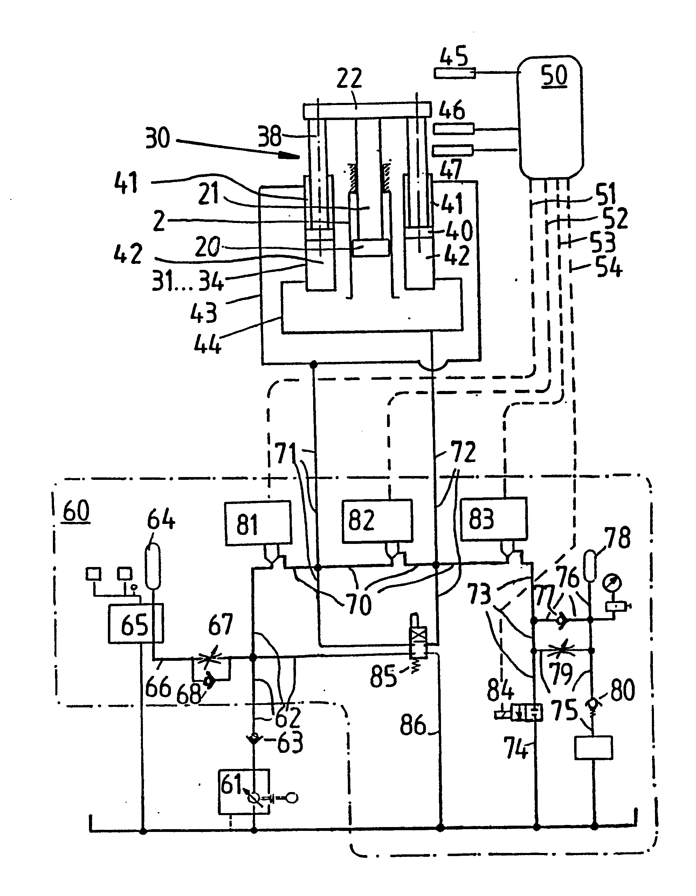

Die Betriebsweise der in Figur 1 gezeigten pneumatisch-hydraulischen Schaltung ist wie folgt:

Zum Aufwärtsfahren des Stempels 20 (Rückhub) werden die fernsteuerbaren Ventile 81 und 82 geöffnet, so daß die Hydropumpe 61 über die Einlaßleitung 62 und die Verbindungsleitung 70 beide Arbeitsleitungen 71 und 72 unter Druck setzt. Da jedoch die Kolbenfläche im Bereich der Kolbenräume 42 größer ist als die im Bereich der Kolbenräume 41, führt der Differenzdruck an den Kolben 40 zu einer Aufwärtsbewegung der Kolben 40 und der Kolbenstangen 38. Die aus den Kolbenräumen 41 verdrängte Hydraulikflüssigkeit gelangt über die ersten Verteilleitungen 43, die erste Arbeitsleitung 71 und die Verbindungsleitung 70 in die zweite Arbeitsleitung 72, d.h. der Aufwärtshub erfolgt relativ rasch.

Zum Abwärtsfahren (Vorhub) des Stempels 20 werden die fernsteuerbaren Ventile 81, 83 und 84 geöffnet und das Ventil 82 geschlossen, so daß Hydraulikflüssigkeit über die erste Arbeitsleitung 71 zuströmen und über die zweite Arbeitsleitung 72 abströmen kann. Wenn der Stempel 20 sich seiner unteren Stellung nähert, wird der Lagesensor 46 erregt, und die Steuerelektronik 50 schließt das fernsteuerbare Ventil 84 über die Steuerleitung 54. Dadurch kann der aus den Kolbenräumen 42 entweichende Hydraulikstrom nur über die Stromregeleinrichtung 79 abfließen, wobei der Öffnungsdruck von 4 bar des Rückschlagventils 80 zu überwinden ist. Der Stempel 20 nähert sich also seiner unteren Endstellung im Kriechgang. Die Endstellung selbst wird durch den Lagesensor 47 festgestellt.

In dieser Endstellung wird die hubvariable Hydropumpe 61 auf Nullhub verstellt. Gleichzeitig sind die Kolben 40 hydraulisch eingespannt, da in den Kolbenräumen 41 der Druck des ersten Druckspeichers 64 und in den Kolbenräumen 42 der Druck des zweiten Druckspeichers 78 herrschen. Diese Einspannung ist aber nicht starr, da die Druckspeicher eine gewisse elastische Nachgiebigkeit zeigen.

Wenn demnach beim Mischvorgang auf dem Stempel 20 von unten her eine stärkere Kraft einwirkt als hydraulische Kraft infolge des Druckspeichers 64 von oben, kann der Stempel 20 nach oben zurückweichen, wobei die verdrängte Hydraulikflüssigkeit aus den Kolbenräumen 41 über die erste Arbeitsleitung 71 in den Druckspeicher 64 wegen des gesperrten Rückschlagventils 63 zurückströmt. Währenddessen erfolgt ein Rückfluß von Hydraulikflüssigkeit in den Kolbenraum 42 über die Nachsaugleitung 76 und das Rückschlagventil 77.

Wenn alsdann der Mischvorgang zu einer Entlastung in der Mischkammer führt, kehrt der Stempel 20 in seine untere Stellung zurück. Es versteht sich, daß dabei die Hydraulikflüssigkeitssäule in dem Kolbenraum 42 und der zweiten Arbeitsleitung 72 über die Stromregeleinrichtung 79 in den zweiten Druckspeicher 78 verdrängt wird.

Die Aufnahmefähigkeit der Druckspeicher 64 und 78 wirkt sich wie ein Puffer auf den Stempel 20 aus, der bei größerer Belastung infolge des Mischvorgangs elastisch zurückweicht und wieder zurückgestellt wird. Dies ist für den Mischvorgang günstig.

Das fernsteuerbare Wegeventil 85 ermöglicht das Anheben des Stempels 20 in Notsituationen. Die Einlaßleitung 62 kann nämlich unmittelbar mit der zweiten Arbeitsleitung 72 verbunden werden, während die erste Arbeitsleitung 71 mit der Auslaßleitung 86 verbunden wird. In einer solchen Situation schließt das fernsteuerbare Ventil 82 automatisch aufgrund seiner Bauweise als Sitzventil, da der über die Verbindungsleitung 70 zugeführte Öffnungsdruck fehlen würde.

Es versteht sich, daß die pneumatisch-hydraulische Steuereinrichtung 60 abgewandelt werden könnte, ohne aus dem Bereich der Erfindung zu gelangen. Beispielsweise ist es nicht notwendig, daß die fernsteuerbaren Ventile 83 und 84 hintereinander geschaltet sind, vielmehr wäre auch eine Parallelschaltung möglich, da die Funktionen "rasches Abwärtsfahren" und "Abwärtsfahren im Schleichgang" sowie "Mischbetriebsstellung des Stempels" nacheinander eingestellt werden und man für diese Funktionen jeweils ein getrenntes — schaltbares Ventil vorsehen könnte. Die Funktion "Aufwärtsfahren im Schnellgang" könnte auch dadurch bewerkstelligt werden, daß der Ring der zweiten Verteilleitungen 44 durch eine Ventileinrichtung unterbrochen ist, die dafür sorgt, daß nur zwei der vier Zylinder 31 bis 34 mit Hydraulikflüssigkeit von der Pumpe 61 her über die Verbindungsleitung 70 und die zweite Arbeitsleitung 72 beaufschlagt werden, während den Kolbenräumen 42 der beiden restlichen Zylinder die aus den Kolbenräumen 41 verdrängte Hydraulikflüssigkeit zugeführt wird, wobei die erwähnte Ventileinrichtung die erste Verteilleitung 43 entsprechend mit dem abgetrennten Teil der zweiten Verteilleitung 44 verbindet.

**Patentansprüche**

1. Innenmischer mit einem Mischergehäuse, darin angeordneten Mischeinrichtungen, einer Beschickungseinrichtung, die durch einen Stempel (20) verschließbar ist, und mit einem auf die Beschickungsöffnung aufgesetzten Füllschacht (2), der mit wenigstens einer verschließbaren Füllöffnung versehen ist, wobei der Stempel (20) im Füllschacht (2) auf- und abgleitend geführt und mit einer von einer Steuereinrichtung (60) gesteuerten hydraulischen Betätigungseinrichtung (30) angetrieben ist, die Kolben (40), Kolbenstangen (38) und Kolbenräume (41, 42) aufweist, wobei der Stempel (20) pneumatisch gepuffert ist, **dadurch gekennzeichnet,** daß die Steuereinrichtung (60) eine Einlaßleitung (62) zur Hydraulikflüssigkeitszufuhr, eine Auslaßleitung (74) zur Hydraulikflüssigkeitsabfuhr, eine erste Arbeitsleitung (71) zur Abwärtsfahrt des Stempels (20), eine zweite Arbeitsleitung (72) zur Aufwärtsfahrt des Stempels, eine Verbindungsleitung (70) zwischen den Arbeitsleitungen (71, 72), eine Ablaufleitung (75) zum gedrosselten Hydraulikflüssigkeitsrücklauf, eine Nachsaugleitung (76), einen mit der Einlaßleitung (62) verbundenen ersten Druckspeicher (64), einen mit der Nachsaugleitung (76) verbundenen zweiten Druckspeicher (78) sowie fernsteuerbare Ventile (81 bis 84) zur Verbindung und Sperrung der Leitungen (62, 70 bis 75) untereinander und zur Einstellung der Betriebszustände "Aufwärtsfahrt des Stempels", "Abwärtsfahrt des Stempels", "Halten des Stempels in oberer Lage" und "Halten des Stempels in unterer Lage" bzw. "Mischbetriebsstellung" enthält, wobei in der Mischbetriebsstellung der fernsteuerbaren Ventile (81 bis 84) die Nachsaugleitung (76) mit dem zweiten Druckspeicher (78) an die zweite Arbeitsleitung (72) anschließbar ist, während die erste Arbeitsleitung (71) mit dem ersten Druckspeicher (64) in Verbindung steht.

2. Innenmischer nach Anspruch 1, dadurch gekennzeichnet, daß die Ablaufleitung (75) ein Rückschlagventil (80) mit einstellbarem Öffnungsdruck beinhaltet.

3. Innenmischer nach Anspruch 2, dadurch gekennzeichnet, daß seine Steuereinrichtung (60) ein erstes fernsteuerbares Ventil (81), ein zweites fernsteuerbares Ventil (82), ein drittes fernsteuerbares Ventil (83) und ein viertes fernsteuerbares Ventil (84) zum Öffnen der Auslaßleitung (74) aufweisen, wobei das erste fernsteuerbare Ventil (81) je nach Stellung die Einlaßleitung (62) und den ersten Druckspeicher (64) mit der ersten Arbeitsleitung (71) verbindet oder aber die Einlaßleitung (62) und den ersten Druckspeicher (64) gegenüber der ersten Arbeitsleitung (71) sperrt, das zweite fernsteuerbare Ventil (82) in der Verbindungsleitung (70) zwischen den beiden Arbeitsleitungen (71, 72) angeordnet ist, das dritte fernsteuerbare Ventil (83) die Auslaßleitung (74), die Ablaufleitung (75) und die Nachsaugleitung (76) mit der zweiten Arbeitsleitung (72) verbindet, bzw. die Auslaßleitung (74), die Ablaufleitung (75) und die Nachsaugleitung (76) gegen die zweite Arbeitsleitung (72) sperrt und das vierte fernsteuerbare Ventil (84) zur Öffnung bzw. Schließung der Auslaßleitung (74) angeordnet ist, wobei im Falle der Schließung der Auslaßleitung (74) bei höherem Druck als dem vorgegebenen Öffnungsdruck des Rückschlagventiles (80) die Ablaufleitung (75) sich öffnet.

4. Innenmischer nach Anspruch 3, dadurch gekennzeichnet, daß das dritte (83) und das vierte (84) fernsteuerbare Ventil in Auslaßrichtung hintereinander angeordnet sind, wobei an dem zwischen diesen Ventilen (83, 84) befindlichen gemeinsamen Leitungsstück (73) die Ablaufleitung (75) und die Nachsaugleitung (76) angeschlossen sind und am vierten fernsteuerbaren Ventil (84) die Auslaßleitung (74).

5. Innenmischer nach einem der Ansprüche 1 bis 4, dadurch gekennzeichnet, daß der erste Druckspeicher (64) über eine erste Stromregeleinrichtung (67) mit dem ersten Ventil (81) verbunden ist.

6. Innenmischer nach einem der Ansprüche 2, 4 oder 5, dadurch gekennzeichnet, daß eine zweite Stromregeleinrichtung (79) das gemeinsame Leitungsstück (73) mit dem zweiten Druckspeicher (78) und mit der Ablaufleitung (75) verbindet.

## Claims

1. Internal mixer, comprising a mixer housing, mixing means disposed therein, a feeding means which is closable by a ram (20), and a filler shaft (2), which is placed over the feed aperture and is provided with at least one closable filler opening, the ram (20) being guided in the filler shaft (2) so as to slide upwardly and downwardly therein and being driven by a hydraulic actuating means (30), which is controlled by a control means (60) and comprises pistons (40), piston rods (38) and piston chambers (41, 42), the ram (20) being pneumatically buffered, characterised in that the control means (60) includes an inlet duct (62) for the supply of hydraulic fluid, an outlet duct (74) for the discharge of hydraulic fluid, a first operating duct (71) for the downward movement of the ram (20), a second operating duct (72) for the upward movement of the ram, a connection duct (70) between the operating ducts (71, 72), a discharge (75) for the throttled return of hydraulic fluid, a subsequent suction duct (76), a first pressure reservoir (64) which is connected to the inlet duct (62), a second pressure reservoir (78) which is connected to the subsequent suction duct (76), and remote-controllable valves (81 to 84) for connecting and blocking the ducts (62, 70 to 75) with respect to one another and for setting the operational positions "upward movement of the ram", "downward movement of the ram", "keep the ram in its upper position", "keep the ram in its lower position" and "mixing operation position", the subsequent suction duct (76) with the second pressure reservoir (78) being connectable to the second operating duct (72) when the remote-controllable valves (81 to 84) are in the mixing operation position, while the first operating duct (71) is in communication with the first pressure reservoir (64).

2. Internal fixer according to claim 1, characterised in that the discharge duct (75) includes a non-return valve (80) having an adjustable opening pressure.

3. Internal fixer according to claim 2, characterised in that its control means (60) comprises a first remote-controllable valve (81), a second remote-controllable valve (82), a third remote-controllable valve (83) and a fourth remote-controllable valve (84) for opening the outlet duct (74), wherein, depending on its position, the first remote-controllable valve (81) either connects the inlet duct (62) and the first pressure reservoir (64) to the first operating duct (71) or, however, blocks the inlet duct (62) and the first pressure reservoir (64) from the first operating duct (71), the second remote-controllable valve (82) is disposed in the connection duct (70) between the two operating ducts (71, 72), the third remote-controllable valve (83) connects the outlet duct (74), the discharge duct (75) and the subsequent suction duct (76) to the second operating duct (72), or respectively blocks the outlet duct (74), the discharge duct (75) and the subsequent suction duct (76) from the second operating duct (72), and the fourth remote-controllable valve (84) is disposed so as to open or close the outlet duct (74), whereby the discharge duct (75) is opened in the event of the outlet duct (74) closing at a higher pressure than the prescribed opening pressure of the non-return valve (80).

4. Internal mixer according to claim 3, characterised in that the third remote-controllable valve (83) and the fourth remote-controllable valve (84) are disposed one behind the other in the outlet direction, the discharge duct (75) and the subsequent suction duct (76) being connected to the common duct portion (73), which is situated between these valves (83, 84), and the outlet duct (74) being connected to the fourth remote-controllable valve (84).

5. Internal mixer according to one of claims 1 to 4, characterised in that the first pressure reservoir (64) is connected to the first valve (81) via the intermediary of a first current regulator (67).

6. Internal fixer according to one of claims 2, 4 or 5, characterised in that a second current regulator (79) connects the common duct portion (73) to the second pressure reservoir (78) and to the discharge duct (75).

## Revendications

1. Mélangeur interne comprenant un corps de mélangeur, des dispositifs de mélange placés dans ce corps, un dispositif d'alimentation pouvant être fermé par un poinçon (20) et un puits de remplissage (2) surmontant l'ouverture d'alimentation et présentant au moins une ouverture de remplissage susceptible d'être fermée, le poinçon (20) étant disposé coulissant et guidé pour pouvoir monter et descendre dans le puits de remplissage (2) et étant mû par un dispositif de manoeuvre hydraulique (30) piloté par un dispositif de commande (60) et possédant des pistons (40), des tiges de piston (38) et des chambres (41, 42), avec amortissement pneumatique du poinçon (20), **caractérisé en ce que** le dispositif de commande (60) comporte une conduite d'admission (62) pour l'amenée de liquide hydraulique, une conduite de sortie (74) pour l'évacuation de liquide hydraulique, une première conduite de travail (71) pour la descente du poinçon (20), une seconde conduite de travail (72) pour la montée du poinçon, une conduite de liaison (70) entre les conduites de travail (71, 72), une conduite de décharge (75) pour le retour étranglé de liquide hydraulique, une conduite (76) d'aspiration pour refaire le plein, un premier accumulateur de pression (64) relié à la conduite d'admission (62), un second accumulateur de pression (78) relié à la conduite d'aspiration (76) ainsi que des vannes télécommandées (81 à 84) pour faire communiquer et couper les communications des conduites (62, 70 à 75) entre elles et pour établir les modes de fonctionnement "montée du poinçon", "descente du poinçon", "maintien du poinçon en position haute" et "maintien du poinçon en position basse" ou "position de mélange", l'agencement étant tel qu'à la position de mélange des vannes télécommandées (81 à 84), la conduite d'aspiration (76) et le second accumulateur de pression (78) puissent être raccordés à la seconde conduite de travail (72), tandis que la première conduite de travail (71) est en liaison avec le premier accumulateur de pression (64).

2. Mélangeur interne selon la revendication 1, caractérisé en ce que la conduite de décharge (75) contient une soupape antiretour (80) ayant une pression d'ouverture réglable.

3. Mélangeur interne selon la revendication 2, caractérisé en ce que son dispositif de commande (60) comporte une première vanne télécommandée (81), une deuxième vanne télécommandée (82), une troisième vanne télécommandée (83) et une quatrième vanne télécommandée (84) pour l'ouverture de la conduite de sortie (74), la première vanne télécommandée (81), suivant la position qu'elle occupe, reliant la conduite d'admission (62) et le premier accumulateur de pression (64) à la première conduite de travail (71) ou isolant la conduite d'admission (62) et le premier accumulateur de pression (64) par rapport à la première conduite de travail (71), la deuxième vanne télécommandée (82) étant disposée dans la conduite de liaison (70) entre les deux conduites de travail (71, 72), la troisième vanne télécommandée (83) reliant la conduite de sortie (74), la conduite de décharge (75) et la conduite d'aspiration (76) à la seconde conduite de travail (72) ou isolant la conduite de sortie (74), la conduite de décharge (75) et la conduite d'aspiration (76) par rapport à la seconde conduite de travail (72), et la quatrième vanne télécommandée (84) étant prévue pour l'ouverture ou la fermeture de la conduite de sortie (74), l'agencement étant tel qu'en cas de fermeture de la conduite de sortie (74) alors que la pression est plus élevée que la pression d'ouverture préfixée de la soupape antiretour (80), la conduite de décharge (75) s'ouvre.

4. Mélangeur interne selon la revendication 3, caractérisé en ce que la troisième (81) et la quatrième (84) vannes télécommandées sont montées l'une derrière l'autre dans le sens de sortie, la conduite de décharge (75) et la conduite d'aspiration (76) étant raccordées au tronçon de conduite commun (73) se trouvant entre ces vannes (83, 84) et la conduite de sortie (74) étant raccordée à la quatrième vanne télécommandée (84).

5. Mélangeur interne selon une des revendications 1 à 4, caractérisé en ce que le premier accumulateur de pression (64) est relié à la première vanne (81) à travers un premier dispositif de réglage de débit (67).

6. Mélangeur interne selon une des revendications 2, 4 ou 5, caractérisé en ce qu'un second dispositif de réglage de débit (79) relie le tronçon de conduite commun (73) au second accumulateur de pression (78) et à la conduite de décharge (75).